**Europäisches Patentamt**

**European Patent Office**

**Office européen des brevets**

(19)

(11) Numéro de publication : **0 330 535 B1**

(12)

# FASCICULE DE BREVET EUROPEEN

(45) Date de publication du fascicule du brevet :
**22.04.92 Bulletin 92/17**

(51) Int. Cl.⁵ : **F16F 9/46, B60G 17/08**

(21) Numéro de dépôt : **89400286.4**

(22) Date de dépôt : **01.02.89**

(54) **Amortisseur pour élément de suspension hydropneumatique de véhicule, notamment véhicule lourd.**

(30) Priorité : **26.02.88 FR 8802426**

(43) Date de publication de la demande :
**30.08.89 Bulletin 89/35**

(45) Mention de la délivrance du brevet :
**22.04.92 Bulletin 92/17**

(84) Etats contractants désignés :
**CH DE ES GB IT LI**

(56) Documents cités :
**EP-A- 0 186 167**
**EP-A- 0 197 859**
**EP-A- 0 274 935**
**DE-A- 3 231 739**

(56) Documents cités :
**PATENT ABSTRACTS OF JAPAN, vol. 9, no.
316 (M-438)[2039], 12 décembre 1985, page
135 M 438; & JP-A-60 151 440 (KAYABA
KOGYO K.K.) 09-08-1985**
**PATENT ABSTRACTS OF JAPAN, vol. 10, no.
246 (M-510)[2302], 23 août 1986, page 35 M
510; & JP-A-61 75 007 (TOKICO LTD) 17-
04-1986**

(73) Titulaire : **S.A.M.M.- Société d'Applications
des Machines Motrices**
**Chemin de la Malmaison**
**F-91570 Bièvres (FR)**

(72) Inventeur : **Joseph, Philippe**
**Quartier le Degay - Loriol du Contat**
**84200 Carpentras (FR)**

(74) Mandataire : **Martin, Jean-Paul et al**
**c/o CABINET LAVOIX 2, Place d'Estienne
d'Orves**
**F-75441 Paris Cedex 09 (FR)**

Jouve, 18, rue Saint-Denis, 75001 PARIS

## Description

La présente invention a pour objet un dispositif d'amortissement pour élément de suspension hydro-pneumatique de véhicule, notamment véhicule lourd, ainsi qu'un dispositif incluant cet amortisseur et un système de commande.

Le document EP-A 0 274 935 bénéficiant de la priorité de la demande française n° 86 18 208 du 26 décembre 1986,mentionné au titre de l'article 54(3) CBE, décrit un amortisseur comprenant un corps fixe percé de lumières de passage du fluide hydraulique de part et d'autre dudit corps, des empilements de rondelles métalliques élastiquement flexibles, disposées dans des déflecteurs rigides placés de chaque côté du corps en regard des lumières de passage de ce dernier, et des moyens pour autoriser le passage du fluide dans un sens seulement pour certaines lumières et dans le sens opposé pour les autres lumières.

Un amortisseur de ce type ne permet pas de faire varier le degré de l'amortissement, donc le degré de dureté ou de souplesse de l'élément de suspension, afin d'adapter la suspension à la nature du terrain ou à l'utilisation du véhicule.

De son côté, le document JP-A 61-75007 décrit un clapet d'amortisseur comprenant un corps fixe percé de lumières de passage de fluide hydraulique de part et d'autre dudit corps, des moyens pour autoriser le passage du fluide dans un sens seulement pour certaines lumières et dans le sens opposé pour les autres lumières, un disque percé d'au moins deux séries de trous de diamètres différents pour le passage du fluide, et correspondant à des réglages différents de l'amortissement, disposé dans le corps, les trous étant ménagés pour pouvoir venir en regard des lumières du corps, des moyens pour faire tourner le disque d'un angle déterminé afin de placer l'une des séries de trous dudit disque en correspondance avec les lumières du corps et des moyens de commande du disque.

Ce clapet d'amortisseur est inutilisable dans des éléments de suspension de véhicule lourd, et ne présente pas la sécurité de fonctionnement nécessaire pour éviter tout risque de blocage en fonction de la position angulaire du disque.

L'invention a donc pour but de proposer un amortisseur perfectionné du type décrit dans le EP-A 0 274 935, agencé de manière à permettre un réglage du degré d'amortissement et à offrir la sécurité voulue pour son fonctionnement.

Suivant l'invention, lesdits moyens pour autoriser le passage du fluide dans un seul sens comprennent des empilements de rondelles métalliques élastiquement flexibles, disposés dans des déflecteurs rigides placés de chaque côté du corps en regard des lumières de passage de ce dernier, l'écartement entre deux trous consécutifs et de diamètre différent du disque est inférieur au diamètre des lumières ménagées dans le corps, et le dispositif comprend un moyen de maintien des empilements de rondelles métalliques, des déflecteurs rigides et du disque traversant ceux-ci axialement.

Le degré d'amortissement est différent selon que l'une ou l'autre des deux séries de trous du disque est placée en regard des lumières du corps fixe. D'autre part, l'écartement entre deux trous consécutifs du disque, tel que précisé ci-dessus, assure une entière sécurité de fonctionnement en réservant toujours un passage au fluide hydraulique, quelle que soit la position angulaire du disque.

Suivant un mode de réalisation de l'invention, les moyens pour faire tourner le disque comprennent : un tube traversant axialement le corps fixe ainsi que le disque et solidaire du corps, une barrette située au centre du disque et dans son plan, solidaire de celui-ci et dont les extrémités traversent des ouvertures ménagées dans le tube, un manchon tubulaire monté coulissant axialement dans le tube, bloqué en rotation dans celui-ci et dans lequel sont formées des boutonnières allongées, inclinées sur l'axe du tube, et de l'amortisseur, ces boutonnières recevant les extrémités opposées de la barrette.

Selon une particularité de l'invention, le corps fixe est constitué de deux parties distinctes percées de lumières et entre lesquelles est intercalé le disque perforé rotatif.

Suivant un mode de réalisation possible de l'amortisseur, dans lequel le disque est percé annulairement de deux séries de trous de diamètres différents, les moyens de commande du disque en rotation comprennent un électro-aimant monté sur un support fixé au tube précité, un fer solidaire d'une extrémité du manchon tubulaire, placé dans l'électro-aimant de manière à entraîner le manchon tubulaire en translation axiale lorsque l'électro-aimant est excité par des connexions électriques appropriées, en provoquant ainsi une rotation du disque d'un angle déterminé, et il est prévu des moyens élastiques de rappel du manchon tubulaire et du disque dans leur position initiale lorsque l'électro-aimant n'est pas excité.

D'autres particularités et avantages de l'invention apparaîtront au cours de la description qui va suivre, faite en référence aux dessins annexés qui en illustrent deux modes de réalisations à titre d'exemples non limitatifs.

La Figure 1 est une vue en coupe axiale d'un premier mode de réalisation de l'amortisseur selon l'invention et de son système de commande, cette vue montrant également de manière schématique et partielle l'environnement de l'amortisseur dans l'élément de suspension correspondant.

La Figure 2 est une vue en coupe axiale à échelle agrandie de l'amortisseur de la Figure 1.

La Figure 3 est une vue en coupe suivant 3-3 de l'amortisseur des figures 1 et 2.

Les Figures 4, 5 et 6 sont des vues analogues aux figures 1, 2 et 3, respectivement illustrant un second mode de réalisation de l'amortisseur selon l'invention, la figure 6 étant une coupe suivant 6-6 de la figure 5.

La figure 7 est un schéma montrant le principe d'un système de commande automatique d'amortisseurs également visé par l'invention.

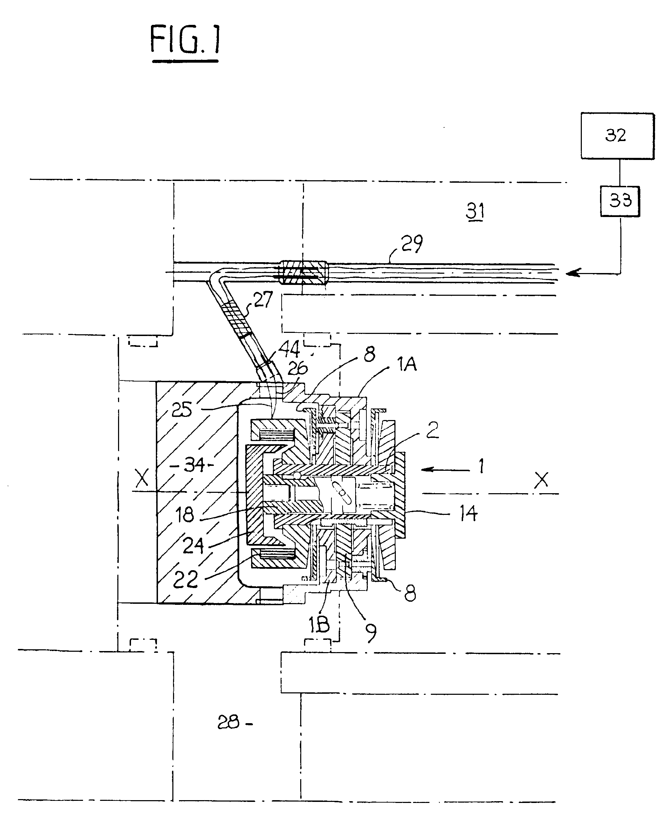

L'amortisseur représenté aux Figures 1 à 3 est destiné à équiper un élément de suspension hydropneumatique de véhicule, notamment de véhicule lourd, tel que par exemple celui décrit dans la demande de brevet EP-A- 274 935.

Cet amortisseur 1 comprend un corps fixe constitué dans cette réalisation en deux parties distinctes 1A et 1B, de révolution autour d'un axe XX, et percées d'ouvertures axiales traversées par un tube 2 auquel les deux parties 1A, 1B du corps 1 sont fixées. Chaque partie 1A et 1B est percée de lumières 3,4 de passage du fluide hydraulique, réparties annulairement. Les lumières 3 débouchent dans des évidements 5 de la face correspondante de la partie 1A et 1B, tandis que les lumières 4 sont des alésages d'inserts tubulaires 6 logés dans le corps et dont une extrémité fait saillie par rapport à la face correspondante des parties 1A et 1B. Les lumières 3 et 4 sont réparties selon une disposition alternée de façon qu'aux lumières 3 de la partie là correspondent les lumières 4 de la partie 1B et inversement.

Par ailleurs, de manière similaire à l'agencement décrit dans la demande de brevet EP-A- 0 274 935, l'amortisseur 1 comprend des empilements 7 de rondelles métalliques élastiquement flexibles, traversées par le tube central 2 et disposées dans des déflecteurs annulaires rigides 8 placés de chaque côté du corps 1A, 1B en regard de ces lumières 3 et 4. Les déflecteurs 8 sont maintenus élastiquement par les empilements 7 en appui contre les extrémités saillantes des inserts 6 tant que la pression hydraulique dans les lumières 4 est insuffisante pour les écarter de ces inserts 6, tandis que le fluide hydraulique peut librement passer entre les mêmes déflecteurs 8 et les lumières 3 du fait de l'écartement entre les déflecteurs 8 et les évidements 5.

L'amortisseur 1 comprend un disque 9 percé de deux séries de trous 11,12 répartis sur un cercle d'axe XX et de diamètres différents. Ces trous sont groupés par paires en regard des lumières 3,4, avec entre les deux trous 11,12 de chaque paire un écartement e inférieur au diamètre des lumières 3,4 du corps 1A, 1B.

L'amortisseur comporte des moyens pour faire tourner le disque 9 d'un angle déterminé égal au secteur angulaire entre les centres de deux trous 11,12 consécutifs. Ceci permet de placer l'une ou l'autre des séries de trous 11 et 12 en regard des lumières 3,4, pour faire varier le degré d'amortissement.

Dans la réalisation décrite, ces moyens comprennent le tube 2, à une extrémité duquel est fixée une rondelle 13 ainsi qu'un fond 14, une barrette 15 située au centre du disque 9 et dans son plan, solidaire de celui-ci par ses extrémités, lesquelles traversent des ouvertures 16 du tube 2 ainsi que des boutonnières allongées 17 ménagées dans un manchon tubulaire 18 monté coulissant axialement dans le tube 2. Les boutonnières 17 sont inclinées sur l'axe XX et le manchon 18 peut coulisser dans le tube 2 à l'encontre de la force antagoniste d'un moyen de rappel élastique constitué ici par un ressort hélicoïdal 10 placé en appui entre le fond 14. Le manchon 18 est bloqué en rotation par rapport au tube 2 par tout moyen approprié, tel qu'une goupille 19 partiellement engagée dans la paroi interne du tube 2 et dont la partie saillante est reçue dans une rainure longitudinale 21 du manchon 18.

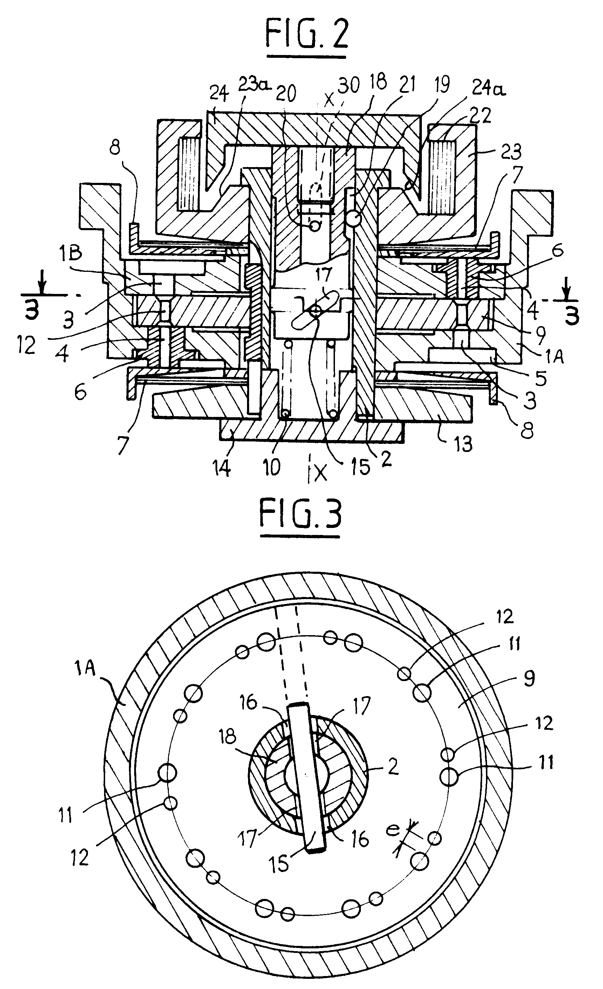

L'amortisseur est équipé de moyens de commande du disque 9 en rotation, qui comprennent dans cette réalisation un électro-aimant 22 monté sur un support 23 formé par une coupelle fixée à l'extrémité du tube 2 opposée à son chapeau 14. L'électro-aimant 22 est associé à un fer 24 solidarisé avec l'extrémité du manchon 18 opposée au ressort 10. Le fer 24 est placé dans l'électro-aimant 22 de manière à entraîner le manchon 18 en translation axiale contre la force de rappel du ressort 10 lorsque l'électro-aimant 22 est excité par des connexions électriques 25,26 (Fig. 1) appropriées. Lorsque l'électro-aimant 22 n'est pas excité, le ressort 10 maintient le manchon 18 et le fer 24 dans leur position de repos de la figure 2, dans laquelle l'une des deux séries de trous 11,12 débouche dans les lumières 3 et 4.

Les fils électriques 25,26 traversent une prise 44 et un passage 27 ménagé dans un condensateur 28, et sont noyés dans du verre coulé dans le passage 27 de manière à l'obturer complètement et à pouvoir résister aux pressions extrêmement élevées (pouvant être de l'ordre de 1000 bars) à l'intérieur de l'amortisseur 1. Au-delà du passage 27, les fils électriques 25,26 s'étendent dans un autre conduit 29 intérieur à un carter 31.

Le circuit de commande de l'amortisseur est complété par une poignée manuelle 32 et éventuellement par une temporisation 33 reliée aux connexions 25,26. L'élément de suspension comprend un piston 34 et peut être d'un type quelconque, par exemple de ceux décrits dans les demandes de brevet de la demanderesse EP-A- 0 197 859, EP-A- 0274 935 et EP-A- 0 307 263.

Au moins une boutonnière axiale 30 est ménagée dans le tube 2 et est traversée par un ergot 20 fixé au manchon 18 et pouvant coulisser dans celle-ci. Les extrémités de la boutonnière 30 forment des butées d'arrêt pour les déplacements coulissants du manchon 18.

Le fonctionnement de l'amortisseur qui vient d'être décrit est le suivant.

Au repos, l'électro-aimant 22 est désexcité, le ressort 10 est détendu et maintient le manchon 18 dans la position de la figure 2 où il est retenu en butée. Le disque 9 est dans une position angulaire telle que les trous 11 de plus grand diamètre sont en correspondance avec les lumières 3 et 4. Les trous 11 de grand diamètre sont utilisés pour le roulage normal du véhicule, auquel ils assurent une suspension relativement souple.

Si l'on veut durcir momentanément la suspension, afin d'amortir un choc ou une secousse brutale dûe à l'utilisation du véhicule (par exemple un tir au canon sur un char de bataille), on actionne la poignée 32 de commande afin d'exciter l'électro-aimant 22. Le fer 24 se déplace axialement et entraîne le manchon 18 jusqu'à ce que le pourtour en biseau 24a du fer 24 vienne en butée contre une surface correspondante 23a du support 23. Au cours de cette translation axiale, la barrette 15 entraîne le disque 9 en rotation en raison du déplacement axial des boutonnières 17. A l'issue de cette rotation d'un angle égal au secteur angulaire séparant deux trous consécutifs 11 et 12, les trous 12 de petit diamètre se trouvent placés en regard des lumières 3 et 4.

Le disque 9 revient à sa position initiale après cessation de l'excitation de l'électro-aimant 22, grâce au ressort de rappel 10.

L'utilisation de la temporisation 33 peut être prévue pour mettre automatiquement l'amortisseur en position "dure" (c'est-à-dire celle où les trous de petit diamètre 12 sont utilisés), en particulier pour la préparation automatique au tir d'un véhicule blindé.

Il est important de noter que l'écartement e entre deux trous 11,12 d'une même paire doit être inférieur au diamètre des lumières 3 et 4, de façon que, quelle que soit la position angulaire du disque 9, un passage soit toujours possible pour le fluide hydraulique, ceci étant évidemment indispensable pour la sécurité de fonctionnement de l'amortisseur et de la suspension.

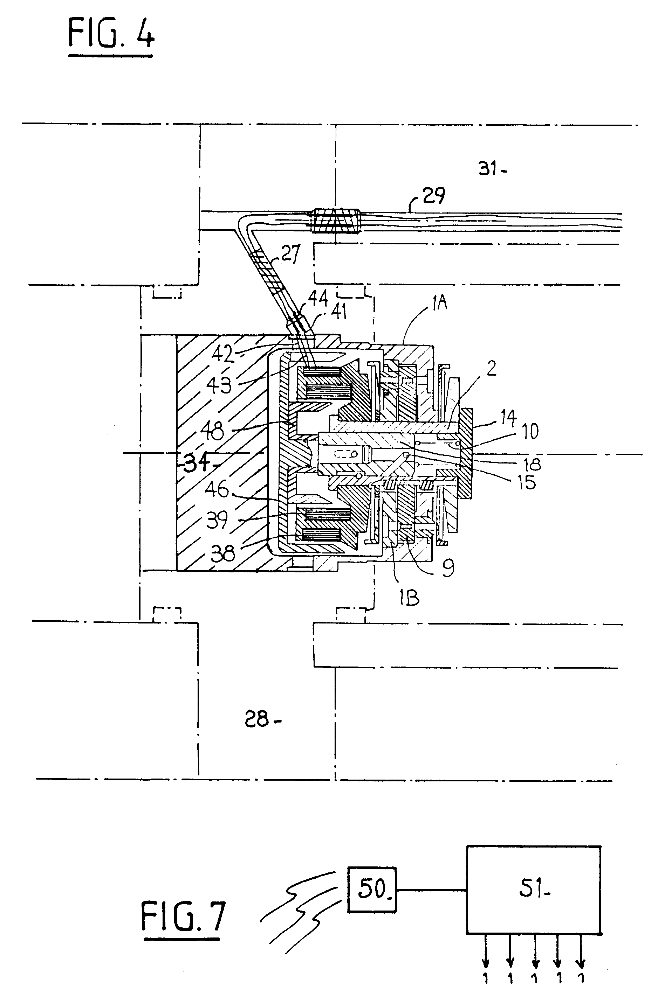

Le second mode de réalisation de l'amortisseur représenté aux figures 4 à 6 diffère du précédent en ce que le disque 9 est percé annulairement de trois séries de trous 35,36,37 de diamètres différents et groupés par trois, et il est corrélativement prévu deux électro-aimants 38,39 de commande du disque 9.

Les trous 36 les plus petits correspondent à une suspension dure, les trous 37, de plus grand diamètre, correspondent à une suspension souple, et les trous 35, de diamètre intermédiaire, correspondent à une suspension normale, dans laquelle le ressort 10 est détendu et les électro-aimants 38,39 désexcités. Ces derniers sont reliés à trois fils 41,42,43 traversant une prise électrique 44 selon un agencement similaire à celui de la réalisation précédente.

Les électro-aimants 38,39 sont montés coaxialement sur un support 45 solidaire de l'extrémité du tube 2 opposée au fond 14. A l'électro-aimant extérieur 38 est associé un fer 46 en forme de coupelle dans laquelle est ménagée une encoche 47 de passage des fils 41,42,43. Sous le fer 46 est disposé un second fer annulaire 48 de plus petit diamètre, et qui peut coulisser à l'intérieur de l'électro-aimant 39. Chaque fer 46, 48 est pourvu d'une collerette respective 46a, 48a dont l'extrémité est biseautée de manière à pouvoir venir s'appliquer en butée contre une surface correspondante 45a, 45b du support 45.

Les fers 46, 48 et les surfaces inclinées 45a, 45b sont agencés de telle sorte que le fer 46 puisse coulisser axialement avec le manchon 18 sur une distance d1 lorsque seul l'électro-aimant 38 est excité, en entraînant également dans ce déplacement le fer 48. Lorsque le second électro-aimant 39 est également excité, il entraîne à nouveau le fer 48 et le manchon 18 jusqu'à ce que l'extrémité biseautée de la collerette 48a vienne en butée sur la surface 45b, après avoir parcouru une distance totale d2 supérieure à d1.

Le fonctionnement de l'amortisseur des figures 4 à 6 se comprend aisément :

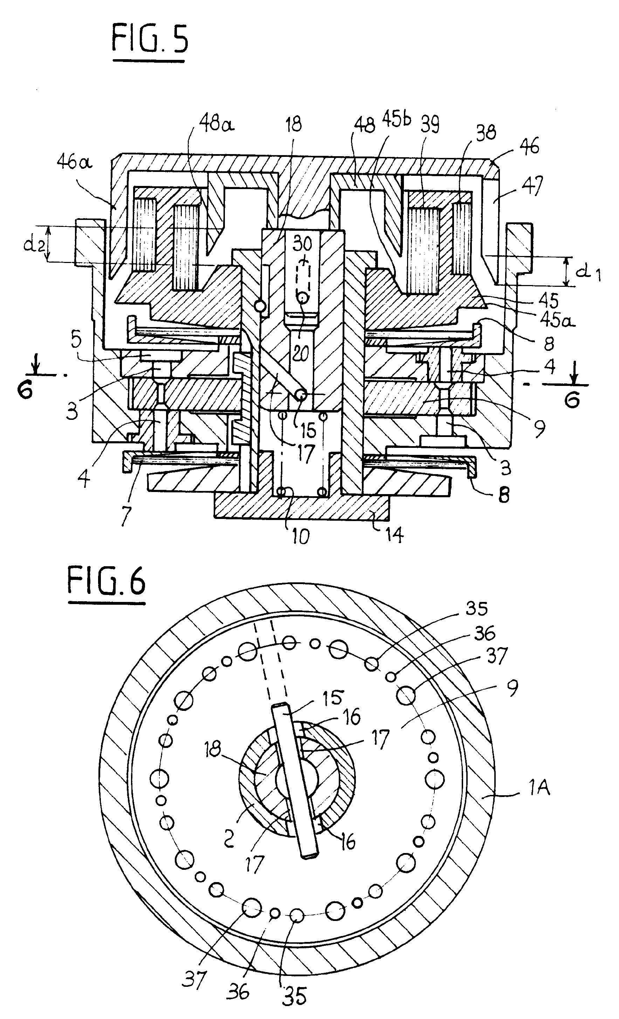

Au repos, le ressort 10 est détendu et le manchon 18 ainsi que les fers 46,48 sont dans la position de la figure 5, les électro-aimants 38,39 n'étant pas excités. Les trous 35 correspondant au roulage normal sont placés en regard des lumières 3 et 4. La barrette 15 est au fond des boutonnières 17 et l'ergot 20 maintenu en butée contre une extrémité de la boutonnière 30.

Lorsqu'on excite le premier électro-aimant 38 par la poignée de commande 32, on provoque un premier déplacement axial d1 du fer 48 et du manchon 18, qui provoque par la barrette 15 un déplacement angulaire du disque 9 au terme duquel les trous 36 de plus petit diamètre sont mis en correspondance avec les lumières 3,4. La suspension est alors "dure". Si l'on excite en outre l'électro-aimant 39 , celui-ci provoque un nouveau coulissement axial du fer 48 et du manchon 18, qui entraîne une nouvelle rotation du disque 9 jusqu'à ce que les trous 37 correspondant à une suspension souple viennent en regard des lumières 3 et 4.

Lorsque les électro-aimants 38,39 sont désexcités, le ressort de rappel 10 ramène le disque 9 et le manchon 18 à leur position initiale.

pour les différentes formes de réalisation possibles de l'amortisseur on peut mixer les positions des disques 9 des amortisseurs associés aux différents éléments de suspension. Ainsi, les éléments de suspension placés au centre du véhicule peuvent être mis en position "dure", tandis que les amortisseurs des éléments de suspension placés aux extrémités peuvent être mis en position souple, ou inversement pour amortir le tangage sur un terrain ondulé.

Il est également possible de remplacer la commande manuelle par la poignée 32 par tout autre système automatique ou semi-automatique, tel que décryptage du terrain par un détecteur radar 50 (Fig. 7) placé à l'avant du véhicule, dont les enregistrements sont analysés par un calculateur 51 commandant en temps réel le réglage des amortisseurs tels que 1.

**Revendications**

1. Dispositif d'amortissement pour élément de suspension hydro-pneumatique de véhicule, comprenant un corps fixe (1A, 1B) percé de lumières (3,4) de passage du fluide hydraulique de part et d'autre dudit corps, des moyens (5, 6) pour autoriser le passage du fluide dans un sens seulement pour certaines lumières (3) et dans le sens opposé pour les autres lumières (4), un disque (9) percé d'au moins deux séries de trous (11, 12; 35, 36, 37) de diamètres différents pour le passage du fluide, et correspondant à des réglages différents de l'amortissement, disposé dans le corps, les trous étant ménagés pour pouvoir venir en regard des lumières (3, 4) du corps, des moyens pour faire tourner ce disque (9) d'un angle déterminé afin de placer l'une des séries de trous dudit disque (9) en correspondance avec les lumières (3, 4) du corps, et des moyens de commande de la rotation du disque (9), caractérisé en ce que lesdits moyens pour autoriser le passage du fluide dans un seul sens comprennent des empilements (7) de rondelles métalliques élastiquement flexibles, disposés dans des déflecteurs rigides (8) placés de chaque côté du corps (1A, 1B) en regard des lumières (3, 4) de passage de ce dernier, en ce que l'écartement (e) entre deux trous consécutifs (11, 12) et de diamètre différent (35, 36, 37) du disque (9) est inférieur au diamètre des lumières (3, 4) ménagées dans le corps, et en ce que ce dispositif comprend un moyen (2, 13, 23) de maintien des empilements de rondelles métalliques, des déflecteurs rigides (8) et du disque (9) traversant ceux-ci axialement.

2. Dispositif d'amortissement selon la revendication 1, caractérisé en ce que les moyens pour faire tourner le disque (9) comprennent : un tube (2) traversant axialement le corps fixe ainsi que le disque (9) et solidaire du corps, une barrette (5) située au centre du disque et dans son plan, solidaire de celui-ci et dont les extrémités traversent des ouvertures (16) ménagées dans le tube (2), un manchon tubulaire (8) monté coulissant axialement dans le tube (2), bloqué en rotation dans celui-ci et dans lequel sont formées des boutonnières (17) allongées, inclinées sur l'axe (XX) du tube (2) et de l'amortisseur, ces boutonnières(17) étant traversées par, les extrémités opposées de la barrette (15).

3. Dispositif d'amortissement selon la revendication 2, caractérisé en ce que le corps fixe est constitué de deux parties distinctes (1A,1B) percées de lumières (3,4) et entre lesquelles est intercalé le disque perforé rotatif (9).

4. Dispositif d'amortissement selon la revendication 3, dans lequel le disque (9) est percé annulairement de deux séries de trous de diamètres différents (11,12), caractérisé en ce que les moyens de commande du disque en rotation comprennent un électro-aimant (22) monté sur un support (23) fixé au tube précité (2), un fer (24) solidaire d'une extrémité du manchon tubulaire (18), placé dans l'électro-aimant (22) de manière à entraîner le manchon tubulaire en translation axiale lorsque l'électro-aimant est excité, en provoquant ainsi une rotation du disque (9) d'un angle déterminé, et il est prévu des moyens élastiques (10) de rappel du manchon tubulaire (18) et du fer (24) dans leur position initiale lorsque l'électro-aimant (22) n'est pas excité.

5. Dispositif d'amortissement selon la revendication 3, dans, lequel le disque (9) est percé annulairement de trois séries de trous de diamètres différents (35,36,37), caractérisé en ce que les moyens de commande du disque (9) en rotation comprennent deux électro-aimants (38,39) montés coaxiaux sur un support (45) solidaire d'une extrémité du tube précité (2), deux fers (46,48) fixés à une extrémité du manchon tubulaire (18) et associés chacun à un électro-aimant (38,39) de façon que l'excitation du premier électro-aimant (38) provoque un premier déplacement axial (d1) du manchon tubulaire (18)et une rotation corrélative du disque (9), et que l'excitation consécutive du second électro-aimant (39) provoque un nouveau déplacement axial du manchon (18) et une nouvelle rotation du disque (9), deux (36,37) des trois séries de trous (35,36,37) étant placées en regard des lumières (3,4) du corps (1A,1B) à l'issue de ces déplacement axiaux successifs, et il est prévu des moyens élastiques (10) de rappel du manchon (18) dans sa position initiale lorsque les électro-aimants sont désexcités, dans laquelle la troisième série de trous (35) est en correspondance avec les lumières (3,4) du corps.

6. Dispositif amortisseur, caractérisé en ce qu'il comprend en combinaison un dispositif d'amortissement selon l'une des revendications 1 à 6, et un système de commande du ou des électro-aimants (22;38,39) comportant une poignée (32) manuelle pouvant être reliée à une temporisation (33), ou un système de commande, soit automatique, soit semi-automatique.

7. Dispositif selon la revendication 6 caractérisé en ce que les trous du disque sont disposés de manière que la commande de la rotation du disque place les trous (12;36,37) de plus petit ou de plus grand diamètre en correspondance avec les lumières (3,4) du corps (1A,1B), les autres trous (11;35) correspondant à une suspension normale communiquant avec lesdites lumières (3,4) lorsque le ou les électro-aimants n'est pas (ne sont pas) excités.

**Patentansprüche**

1. Dämpfungsvorrichtung für ein hydropneumatisches Fahrzeugaufhängungselement, mit einem festen Körper (1A, 1B), der von Öffnungen (3, 4) für den Durchtritt des Hydraulikfluids beiderseits des Körpers durchsetzt ist, Mitteln (5, 6), die den Durchtritt des Fluids für bestimmte Öffnungen (3) nur in einer Richtung und für die anderen Öffnungen (4) nur in der entgegengesetzten Richtung gestatten, einer in dem Körper angeordneten Scheibe (9), die durchsetzt ist von wenigstens zwei Gruppen von Öffnungen (11, 12; 35, 36, 37) mit unterschiedlichen Durchmessern für den Durchtritt des Fluids, entsprechend unterschiedlichen Einstellungen der Dämpfung, wobei die Löcher so angeordnet sind, daß sie mit den Öffnungen (3, 4) des Körpers ausgerichtet werden können, Mitteln zum Drehen der Scheibe (9) um einen bestimmten Winkel, um eine der Gruppen der Löcher der Scheibe (9) mit den Öffnungen (3, 4) des Körpers auszurichten, und Mitteln zur Steuerung der Drehung der Scheibe (9), dadurch **gekennzeichnet**, daß die Mittel, die den Durchtritt des Fluids in nur einer Richtung gestatten, Stapel (7) von elastisch verformbaren Metallscheiben aufweisen, die in starren Ablenkern (8) angeordnet sind, die auf jeder Seite des Körpers (1A, 1B) den Durchtrittsöffnungen (3, 4) dieses Körpers gegenüberliegend angeordnet sind, daß der Zwischenraum (e) zwischen zwei aufeinanderfolgenden Löchern (11, 12) unterschiedlichen Durchmessers (35, 36, 37) der Scheibe (9) kleiner ist als der Durchmesser der in dem Körper ausgebildeten Öffnungen (3, 4), und daß diese Vorrichtung ein Mittel (2, 13, 23) zum Halten der Stapel der Metallscheiben, der starren Ablenker (8) und der Scheibe (9) aufweist, das axial durch diese Teile hindurchläuft.

2. Dämpfungsvorrichtung nach Anspruch 1, dadurch **gekennzeichnet**, daß die Mittel zum Drehen der Scheibe (9) aufweisen: ein axial durch den festen Körper und durch die Scheibe (9) verlaufendes, starr mit dem Körper ausgebildetes Rohr (2), einen in der Mitte der Scheibe und in deren Ebene angeordneten Steg (5), der starr mit der Scheibe verbunden ist und dessen Enden durch in dem Rohr (2) ausgebildete Öffnungen verlaufen, und eine rohrförmige Hülse (18), die axial verschiebbar in dem Rohr (2) montiert und in diesem gegen Drehung gesichert ist und in der Langlöcher (17) ausgebildet sind, die schräg zur Achse (XX) des Rohres (2) und des Dämpfers geneigt sind und von den entgegengesetzten Enden des Steges (15) durchquert werden.

3. Dämpfungsvorrichtung nach Anspruch 2, dadurch **gekennzeichnet**, daß der feste Körper durch zwei von Öffnungen (3, 4) durchsetzte getrennte Teile (1A, 1B) gebildet wird, zwischen denen die perforierte drehbare Scheibe (9) eingefügt ist.

4. Dämpfungsvorrichtung nach Anspruch 3, bei der die Scheibe (9) ringförmig von zwei Gruppen von Löchern mit unterschiedlichen Durchmessern (11, 12) durchsetzt ist, dadurch **gekennzeichnet**, daß die Mittel zur Steuerung der Drehung der Scheibe einen Elektromagneten (22), der auf einem an dem erwähnten Rohr (2) befestigten Träger (23) montiert ist, und ein starr mit einem Ende der rohrförmigen Hülse (18) verbundenes Eisen (24) aufweisen, das derart in dem Elektromagneten (22) angeordnet ist, daß es die rohrförmige Hülse zu einer axialen Translationsbewegung antreibt, wenn der Elektromagnet erregt ist, wodurch eine Drehung der Scheibe (9) um einen bestimmten Winkel bewirkt wird, und daß elastische Rückstellmittel (10) zum Zurückstellen der rohrförmigen Hülse (18) und des Eisens (2 4) in ihre Ausgangsstellung bei nichterregtem Elektromagneten (22) vorgesehen sind.

5. Dämpfungsvorrichtung nach Anspruch 3, bei der die Scheibe (9) ringförmig von drei Gruppen von Löchern mit unterschiedlichen Durchmessern (35, 36, 37) durchsetzt ist, dadurch **gekennzeichnet**, daß die Mittel zur Steuerung der Drehung der Scheibe (9) zwei Elektromagnete (38, 39), die koaxial an einem starr mit einem Ende des erwähnten Rohres (2) verbundenen Träger (45) montiert sind, und zwei an einem Ende der rohrförmigen Hülse (18) befestigte Eisen (46, 48) aufweisen, die jeweils einem der Elektromagnete (38, 39) derart zugeordnet sind, daß die Erregung des ersten Elektromagneten eine erste axiale Verschiebung (d1) der rohrförmigen Hülse (18) und eine entsprechende Drehung der Scheibe (9) bewirkt und die anschließende Erregung des zweiten Elektromagneten (39) eine erneute axiale Verschiebung der Hülse (18) und eine erneute Drehung der Scheibe (9) bewirkt, wobei zwei (36, 37) der drei Gruppen von Löchern (35, 36, 37) infolge dieser aufeinanderfolgenden axialen Verschiebungen in eine den Öffnungen (3, 4) des Körpers (1A, 1B) gegenüberliegende Position gebracht werden, und daß elastische Rückstellmittel (10) zum Zurückstellen der Hülse (18) in ihre Ausgangsstellung bei nichterregtem Elektromagneten vorgesehen sind, in welcher Ausgangsstellung die dritte Gruppe der Löcher (35) mit den Öffnungen (3, 4) des Körpers fluchtet.

6. Dämpfer, dadurch **gekennzeichnet**, daß er eine Dämpfungsvorrichtung nach einem der Ansprüche 1 bis 6 in Kombination mit einem Steuersystem für den Elektromagneten (22) oder die Elektromagnete (38, 39) aufweist, mit einem handbetätigbaren Knopf (32), der mit einem Verzögerungsglied (33) oder einem automatischen oder halbautomatischen Steuersystem verbindbar ist.

7. Dämpfer nach Anspruch 6, dadurch **gekennzeichnet**, daß die Löcher der Scheibe derart angeordnet sind, daß der Drehantrieb für die Scheibe die Löcher (12; 36, 37) mit dem kleinsten oder dem größtem Durchmesser in die mit den Öffnungen (3, 4) des Körpers (1A, 1B) ausgerichtete Position bringt und die anderen Löcher (11; 35), die einer normalen Aufhängung entsprechen, mit den Öffnungen (3, 4) in Verbindung stehen, wenn der Elektromagnet nicht erregt ist bzw. die Elektromagnete nicht erregt sind.

## Claims

1. A shock-absorber device for a hydropneumatic vehicle suspension element, comprising a fixed body (1A, 1B) in which there are ports (3, 4) for the passage of hydraulic fluid on either side of the said body, means (5, 6) for allowing the passage of fluid in only one direction for certain ports (3) and in the opposite direction for the other ports (4), a disc (9) provided with at least two series of orifices (11, 12; 35, 36, 37) of different diameters for the passage of the fluid and corresponding to different settings for the damping effect, disposed in the body, the orifices being disposed so that they can face the ports (3, 4) in the body, means of causing the disc (9) to turn through a specific angle in order to position one of the series of orifices in the said disc (9) to correspond with the ports (3, 4) in the body, and means of controlling rotation of the disc (9), characterised in that the said means of allowing passage of the fluid in only one direction comprise stacks (7) of resiliently flexible metal washers disposed in rigid deflectors (8) placed on each side of the body (1A, 1B) opposite the ports in this latter, and in that the spacing (e) between two consecutive orifices (11, 12) and of different diameter (35, 36, 37) in the disc (9) is less than the diameter of the ports (3, 4) disposed in the body and in that this device comprises a means (2, 13, 23) of supporting the stacks of metal washers, the rigid deflectors (8) and the disc (9) traversing these latter axially.

2. A shock-absorber device according to Claim 1, characterised in that the means of causing the disc (9) to rotate comprise: a tube (2) axially traversing the fixed body as well as the disc (9) and rigid with the body, a bar (5) situated in the centre of the disc and in its plane, rigid with the disc and of which the ends traverse apertures (16) disposed in the tube (2), a tubular sleeve (8) mounted to slide axially in the tube (2) and rotatably locked in the tube and in which there are formed elongate slots (17) inclined to the axis (XX) of the tube (2) and of the shock-absorber, the said slots (17) being traversed by the opposite ends of the bar (15).

3. A shock-absorber device according to Claim 2, characterised in that the fixed body consists of two distinct parts (1A, 1B) provided with ports (3, 4) and between which the rotatable perforated disc (9) is inserted.

4. A shock-absorber device according to Claim 3, in which the disc (9) is provided annularly with two series of orifices of different diameters (11, 12), characterised in that the means of controlling rotation of the disc comprise an electromagnet (22) mounted on a support (23) fixed to the aforesaid tube (2), a bar (24) rigid with one end of the tubular sleeve (18), placed in the electromagnet (22) in such a way as to entrain the tubular sleeve in an axial translatory movement when the electromagnet is energised, so causing rotation of the disc (9) through a specific angle, and in that resilient means (10) are provided for the restoration of the tubular sleeve (18) and the rod (24) to their initial position when the electromagnet (22) is not energised.

5. A shock-absorber device according to Claim 3, in which the disc (9) is annularly provided with three series of orifices of different diameters (35, 36, 37), characterised in that the means of causing the disc (9) to rotate comprise two electromagnets (38, 39) mounted to be coaxial on a support (45) rigid with one end of the aforesaid tube (2), two rods (46, 48) fixed to one end of the tubular sleeve (18) and each associated with an electromagnet (38, 39) so that energising of the first electromagnet (38) causes a first axial displacement (d1) of the tubular sleeve (18) and a co-relative rotation of the disc (9), the consecutive energising of the second electromagnet (39) causing a fresh axial displacement of the sleeve (18) and a fresh rotation of the disc (9), two (36, 37) of the three series of orifices (35, 36, 37) being placed opposite ports (3, 4) in the body (1A, 1B) following these successive axial displacements, elastic means (10) being provided to restore the sleeve (18) to its initial position when the electromagnets are de-energised, in which the third series of holes (35) corresponds to the ports (3, 4) in the body.

6. A shock-absorber device characterised in that it comprises in combination a shock-absorber device according to one of Claims 1 to 6 and a system of controlling the electromagnet or electromagnets (22, 38, 39) comprising a handle (32) adapted to be connected to a timing device (33) or an either automatic or semi-automatic operating system.

7. A device according to Claim 6, characterised in that the orifices in the disc are so disposed that controlling rotation of the disc places the holes (12, 36, 37) of smallest or greatest diameter to correspond with the ports (3, 4) in the body (1A, 1B), the other orifices (11, 35) corresponding to a normal suspension communicating with the said ports (3, 4) when the electromagnet or electromagnets is or are not energised.

# FIG.1

# FIG.2

# FIG.3

# FIG. 4

# FIG.7

## FIG.5

## FIG.6